Europäisches Patentamt

European Patent Office

Office européen des brevets

(19)

(11) Publication number: **0 190 896**
A2

(12) **EUROPEAN PATENT APPLICATION**

(21) Application number: 86300680.5

(22) Date of filing: 31.01.86

(51) Int. Cl.⁴: **B 01 J 39/00**
**C 25 D 21/22**

(30) Priority: 01.02.85 US 697319

(43) Date of publication of application:
13.08.86 Bulletin 86/33

(84) Designated Contracting States:
AT BE CH DE FR GB IT LI LU NL SE

(71) Applicant: ENGELHARD CORPORATION
70 Wood Avenue South CN 770
Iselin New Jersey 08830(US)

(72) Inventor: Halecky, Alan
20 Harvard Terrace
West Orange New Jersey 07052(US)

(72) Inventor: Karustis, George A.
832 Carleton Road
Westfield New Jersey(US)

(74) Representative: Fisher, Adrian John et al,
Carpmaels & Ransford 43 Bloomsbury Square
London WC1A 2RA(GB)

(54) Method and apparatus for ion exchange lead removal.

(57) A method for ion exchange removal of lead ion from solution utilizes a material which is insoluble in the solution and contains ion-exchangeable strontium or calcium or both. Ion exchange removal of even very low concentrations of lead has been found to be selective in the presence of gold and gold-alloying metals such as cobalt, nickel, iron, antimony and indium. The use of strontium or calcium exchange materials is found to be effective to remove lead ion from a liquid in the presence of gold and, e.g., cobalt ion, without significant removal of gold or cobalt. Apparatus in accordance with the invention includes a liquid-permeable contact material comprising an exchange material which may be distended upon a liquid-permeable support for passage therethrough of liquid to be treated. A gold-plating solution in accordance with the invention comprises a source of gold and contains calcium and/or strontium ion and not more than about 20 ppm lead.

EP 0 190 896 A2

./...

FIG.1

## BACKGROUND OF THE INVENTION

### Field Of The Invention

The present invention concerns ion exchange removal of lead ion from a liquid containing the same, and materials and apparatus capable of effectuating such ion exchange removal. More particularly, the present invention is concerned with method, materials and apparatus adapted for the removal of lead ion from liquids such as aqueous solutions of metal salts and, in one aspect, with the selective removal of lead ion from liquids also containing gold or other valuable ions.

### Description Of Related Art

Ion exchange techniques are of course well known in the art as are numerous materials containing exchangeable atoms or ions which are utilizable in ion exchange methods. For example, U.S. Patent 3,890,225 (Kajiyama) discloses a process for the removal of ions of heavy metals such as copper, cadmium, mercury, lead, zinc, etc., by contacting the same with coral fossil limestone. The high porosity of the coral fossil limestone is stated to be advantageous in adsorbing the heavy metal ions. At column 4, line 15, et seq, the patentee states that because a main component of the material is calcium carbonate, an exchange reaction takes place replacing the calcium with heavy metal ions such as copper, cadmium, iron, mercury, etc. Figures 3 and 4 of the patent show apparatus for treating, respectively, large quantities and laboratory quantities of waste water for the removal of heavy metal ions therefrom.

U.S. Patent 3,935,098 (Oda et al) shows an adsorption process for removal from solution of heavy metals or heavy metallic compounds utilizing a specified class of resins which include a cation which may be, among others, calcium. The resin may be carried on a porous material carrier such as diatomaceous earth, pumice, zeolite, kaolin, alumina or the like.

## SUMMARY OF THE INVENTION

In accordance with the present invention there is provided a method for ion-exchange removal of lead ion from a liquid containing the same, the method comprising contacting the liquid with a solid exchange material which contains exchangeable strontium and is insoluble in the liquid, which may be an aqueous lead ion-containing solution, to exchange strontium in the material with lead ion in the liquid.

In accordance with another aspect of the present invention there is provided a method for selective ion exchange removal of lead ion from a liquid containing lead ion and one or both of gold ion and gold-alloying ion, the method comprising: contacting the liquid with a solid exchange material which is insoluble in the liquid (which may be an aqueous solution containing lead ion and one or both of gold ion and gold-alloying ion) and which contains exchangeable ion selected from the group consisting of one or both of strontium and calcium so as to exchange exchangeable ion in the material with lead ion in the liquid preferentially to the one or both of gold and gold-alloying ion in the liquid.

In one aspect of the invention the exchange material is selected from the group consisting of one or more of a glass, a resin, a silicate, a borate, a sulfate, an aluminate, a pyrophosphate and a zeolite. In one preferred aspect, the exchange material is wollastonite and in another it is celestite.

In another aspect of the invention, the exchange material is in the form of a coherent contact medium and the step of contacting the liquid with the exchange material comprises passing the liquid into contact with the contact medium, and further includes the step of withdrawing the contacted liquid from the contact medium. As used herein and in the claims, the word "coherent" has its usual meaning of the quality of holding or being held together firmly as part of the mass. The term "contact medium" simply means a material to be contacted by a liquid for treatment of the liquid. Accordingly, a "coherent contact medium" as used herein and in the claims means and includes a contact medium confined within a container or otherwise defining a discrete mass through which a liquid can be pumped, as distinguished from a particulate material which is free to disperse or be dispersed throughout an entire body of liquid.

Still another aspect of the invention provides an apparatus for ion-exchange removal of lead ion from a liquid containing the same, the apparatus comprising: a container having a liquid-flow inlet and a liquid-flow outlet; and a coherent, liquid-permeable medium disposed within the container so that liquid flowing therethrough from the inlet to the outlet thereof is constrained to flow through the contact medium, the contact medium comprising a solid exchange material which is insoluble in the liquid and contains exchangeable ion selected from the group consisting of one or both of strontium and calcium.

In accordance with the pesent invention there is also provided an aqueous gold-plating bath comprising a source of gold ion and an electrolyte and characterized by containing ions selected from the group consisting of one or both of calcium ion and strontium ion and from 0 to about 20 ppm lead ion, preferably not more than about 10 ppm lead ion.

In another aspect of the invention the plating bath further contains one or more base metal ions selected from the group consisting of one or more of cobalt, nickel, iron, antimony and indium.

Yet another aspect of the invention provides that the source of calcium and strontium ion in the bath is one or more solid exchange materials which are insoluble in the bath and contain one or both of calcium and strontium, the one or both of calcium and strontium ion in the bath being derived from the materials by ion exchange with lead ion from the bath.

Other aspects of the invention are described in the following detailed description of preferred embodiments.

BRIEF DESCRIPTION OF THE DRAWINGS

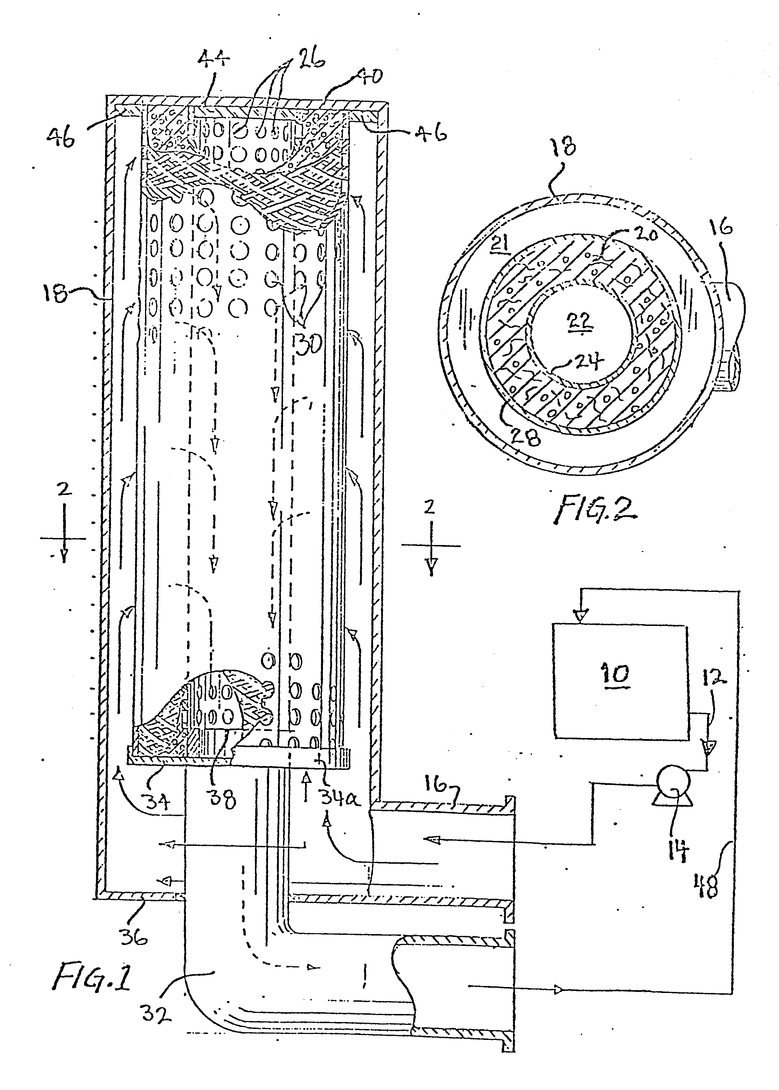

Figure 1 is a section view in elevation with parts broken away of one embodiment of apparatus in accordance with the present invention, including a schematic rendition of a tank of liquid to be treated and its connections to the apparatus; and

Figure 2 is a view along line 2-2 of Figure 1.

DESCRIPTION OF THE PREFERRED EMBODIMENTS

The removal of heavy metal contaminants such as lead from various liquids is often desired not only from the point of view of health and environmental concerns but because lead often adversely affects certain processes. For example, lead contamination of gold-plating baths has been a serious and persistent problem in gold plating in the printed circuit industry. Such gold-plating baths often contain one or more base metals such as cobalt, nickel, iron, antimony and indium to harden the plated gold. Because gold-plating baths, in particular gold baths containing such gold-hardening base metals, usually operate at low pH, e.g., 4 or thereabouts, it is difficult, if not impossible, to find suitable chelating or precipitating agents that will selectively remove low concentrations of lead without also removing significant quantities of gold. For example, lead contents on the order of a few parts per million may have to be removed from a bath containing gold ion and/or gold-alloying ion. For obvious economic reasons it is necessary to eliminate or drastically reduce the loss of gold and gold-alloying ion from the bath in the course of treating it to remove lead ion therefrom.

While the present invention has particular utility in the purification of gold-plating baths by selective removal of lead ion therefrom, the present invention is not limited to such application but is generally useful whenever it is desired to remove lead ion from a liquid containing the same. The liquid may be a plating bath, waste water or any other liquid contaminated by lead ion and the lead removal may be selective, i.e., removal of lead preferentially to another ion such as gold, or non-selective.

Attempts to use conventional ion exchange techniques with commercially available ion exchange resins (which do not contain calcium or strontium) were ineffective in selectively removing lead from contaminated gold-plating solutions. In attempting to remove lead ion from solution in concentrations as low as 20 ppm or less, it was found that calcium compounds such as calcium oxalate or calcium hydroxide not only were effective for lead removal but were selective to lead ion in the presence of gold ion and of certain gold-alloying ions. Initial treatment techniques comprised slurrying calcium hydroxide or calcium oxalate particles, sometimes together with adsorbent carbon particles, into a lead-contaminated gold-plating bath and, after a suitable contact time, filtering the bath to remove the particulate material. The calcium compounds had exchanged calcium ion for lead ion in solution so that the latter was removed with the filtered material. One difficulty with this technique is that it necessarily requires a batch type treatment including the pumping of the entire solution to be treated through a filter to remove the lead-exchanged calcium compound. Other disadvantages were that calcium oxalate filtration rates are slow and calcium hydroxide can dissolve in the plating solution if the pH becomes too low. Obviously, if the exchange material dissolves in the liquid being treated, the lead ion will be returned into solution. (As used herein and in the claims, a material which is "insoluble" in the liquid means a material sufficiently insoluble in the liquid at the temperature utilized so as to be effective in attaining the purpose of the invention.) Other calcium compounds were tested and it has been found that calcium aluminate and calcium pyrophosphate are also effective in treating lead contaminated gold solutions, specifically, cobalt containing gold cyanide plating baths, to selectively remove lead ion without diminishing either the gold or the cobalt ion content. Calcium silicate was also found to be useful although it was somewhat less effective in lead removal than the aluminate or pyrophosphate. However, the calcium silicate permits a rapid filtration which mitigates somewhat the disadvantage of batch-wise treatment. The mineral wollastonite, which is calcium metasilicate, is a preferred exchange material, as described below. Attempts to use corresponding magnesium and barium compounds were totally ineffective for lead removal, as were silica and alumina. The efficacy of the above-mentioned calcium compounds in removing lead from solution was tested by deliberately contaminating gold cyanide electroplating baths containing cobalt as a hardener with about 20 parts per million by weight ("ppm") lead and utilizing the solutions for plating in a Hull cell. The lead-contaminated gold-plating solutions produced discolored gold deposits. Thereafter, batch treatments of the solutions with insoluble calcium compounds as described above were effective in reducing the lead content and in particular in attaining selective reduction of the lead content, i.e., removing the lead without removing to any significant degree the gold ion or the cobalt ion from the plating solution. The treated gold-plating solutions produced bright gold deposits free of the discoloration resulting from the lead-contaminated plating solutions. Generally, lead contamination of gold plating baths should not be more than about 20 ppm, preferably not more than about 15 ppm, more preferably not more than about 10 ppm lead. Most preferable of course is a lead-free gold-plating solution.

Success of calcium as an exchange ion for lead removal and in particular for selective lead removal from solutions containing gold led to a consideration of strontium as a possible exchange ion. Accordingly, a strontium silicate, strontium metasilicate, was prepared by adding strontium nitrate to sodium metasilicate solution at 70°C, and collecting, washing and drying the precipitate. A cobalt containing gold cyanide electroplating bath was prepared from potassium gold cyanide, a suitable conventional cobalt complex plus usual plating bath additives and adjusted with citric acid to a pH of 4.2. The bath solution was contaminated with 24.8 ppm lead and then 5 grams of the strontium metasilicate was added to one liter of the bath at 50°C, with stirring for one hour. The lead-containing strontium metasilicate was then removed by filtration and the treated solution showed a reduction of the lead contamination to 1.6 ppm. The experiment was repeated with an initial lead contamination of 36.7 ppm and, after the same treatment, the lead contamination was reduced to 2 ppm. Neither the gold nor the cobalt content was affected by the treatment.

These tests showed the efficacy of strontium compounds in removing lead from solution. However, strontium silicate is a difficult material to filter and, like calcium oxalate, presents practical problems in commercial use. It would be advantageous to be able to circulate liquid to be treated on a more or less continuous basis through a coherent body of exchange material and return the treated liquid to use. However, most calcium and strontium salts tend to compact excessively under pressure thereby making it unfeasible or impossible to pump the liquid through a coherent body of such salts, for example, a bed of such salts in a filter cartridge, to provide continuous or intermittent treatment of a stream of liquid. The practice of withdrawing a portion of liquid from a body of liquid such as an electroplating tank (or diverting a stream of liquid from a conduit) and passing the withdrawn or diverted portion through a filter or other apparatus for treatment and then returning the treated portion to the main body or main stream of liquid enables continuous use of the main body of liquid while a portion thereof is withdrawn for treatment. Although such treatments are usually applied continuously, they obviously may also be carried out on an intermittent basis as may be required in a given situation. Some compounds, such as calcium aluminate, calcium pyrophosphate and calcium zeolites have been found to be particularly suitable for such treat-

ment in that these materials can be retained within a container such as a filter cartridge and are capable of having liquid pumped through them in the manner of a filter. Wollastonite was found to be particularly useful in this regard inasmuch as its coarse, fibrous structure permitted a liquid such as a gold-plating solution to be pumped through a cartridge containing wollastonite or a mixture of wollastonite and a particulate filter bed medium, without excessive pressure drop. Any suitable particulate filter bed medium such as sand, diatomaceous earth, glass beads or the like may be used to render the bed of exchange material less dense and thereby facilitate pumping the liquid therethrough.

Another preferred exchange material of the invention, as described below, is the mineral celestite (also known as celestine) which comprises strontium sulfate and occasionally occurs with barium and calcium. In any case, the exchange material may be crushed and the particles dispersed on a liquid-permeable support as described below. Preferred materials are those calcium and/or strontium exchange materials which can be maintained in a coherent body so that the liquid to be treated can be pumped therethrough for continuous or intermittent treatment as opposed to the batch treatment of an entire body of liquid by a dispersed, particulate exchange material as described above. However, the batch treatment technique comprises a part of the present invention.

Various embodiments of the invention are described in the following examples.

### Example 1

Strontium silicate was prepared in the form of a glass by heating together the following materials:

|  |  |
|---|---|
| 35.2 grams | Strontium carbonate |
| 7.3 grams | Silica |
| 7.5 grams | Boric oxide |

The above ingredients were heated at about 1300°C to fuse the material into a glass. A cobalt and gold cyanide plating solution as described above was contaminated with 55.7 ppm lead ion and a 5 gram sample of the glass, without crushing, was stirred into one liter of the plating solution at 50°C. Lead concentration was measured after one hour of stirring and was found to have been reduced to 42.4 ppm. After 3 hours of stirring the lead concentration had been reduced to 34.6 ppm. There was no measurable diminution in the gold or cobalt content of the plating solutions. The gold plating bath of course contained strontium ion exchanged from the strontium exchange material but in plating tests no adverse effect was noted due to the presence of strontium. That is, gold plating of identical quality was obtained from the strontium containing gold plating bath as could be obtained from the identical plating bath free of strontium.

## Example 2

Another test was carried out in which 10 grams of the strontium glass of Example 1 was stirred into one liter of the cobalt containing gold cyanide electroplating solution. The plating bath was contaminated with a high lead ion concentration of 82 ppm and after 19 hours of stirring the lead content had been reduced to 28 ppm with no significant diminution in the gold or cobalt content of the electroplating bath. The original 10 grams of strontium glass was then removed from the solution and replaced with a fresh 10 grams of strontium glass. Further reductions in lead concentration were noted as set forth in the following Table I.

## TABLE I

Use Of Slurry Of Strontium Glass Particles For Lead Removal

| Hours of Stirring | Lead Concentration(ppm) |
|---|---|
| 0 | 82 |
| 8 | 38.8 |
| 16 | 31 |
| 19 | 28.1 |

At this point, replaced original 10g. strontium glass with 10g. fresh strontium glass.

| | |
|---|---|
| 27 | 12 |
| 35 | 6.8 |

The gold and cobalt content was unaffected by the treatment.

## Example 3

Strontium borate was prepared by mixing strontium nitrate and sodium borate in aqueous solution to precipitate strontium borate. A cobalt containing gold cyanide electroplating bath was contaminated with 57 ppm lead and then 5 grams of strontium borate were added to one liter of the contaminated solution and stirred for four hours. At the end of four hours the lead concentration had been reduced to 2 ppm. Apparently, the open structure of the strontium borate as compared to the strontium glass facilitated the exchange of ions, providing much more rapid removal of the lead.

## Example 4

A strontium containing acrylate resin was prepared by dissolving 10 grams of strontium nitrate and 30 grams of an acrylate resin sold under the trademark ACRYLOID Resin B-50 by Rohm & Haas in dimethyl formamide, and evaporating the solution to dryness. The adduct hardened after standing a few hours and the material was crushed into a coarse powder. One liter of a cobalt containing gold cyanide electroplating solution was contaminated with lead in the amount of 21.9 ppm lead and 40 grams of the strontium acrylate resin was stirred in the solution at 50°C for one hour. The lead content was reduced from 21.9 to 4.7 ppm. The treated electrolyte was then utilized in a Hull cell for plating and plated out a fully bright panel with no change in efficiency of the bath as compared to an untreated, uncontaminated identical electroplating bath.

In order to provide the exchange material in the form of a coherent body or contact medium through which liquid can be pumped, the exchange material can be placed into a container such as a filter cartridge housing having a liquid inlet and a liquid outlet to provide a filter bed consisting of or containing the exchange material. If the exchange material tends to compact under the pressure of the liquid being pumped through it, a filter bed medium such as coarse sand may be added to provide a non-compressible material providing interstices for fluid flow through the filter bed containing the exchange material. For example, a cylindrical chamber having a liquid inlet at one end and a liquid outlet at its longitudinally opposite end may have a layer of sand placed adjacent the bottom or outlet end, and a layer of a mixture of sand and wollastonite above the sand layer. The sand merely serves to increase the porosity of the bed and overcome any tendency of the wollastonite fibers to pack under the pressure drop of the liquid flowed therethrough.

An alternate structure which provides a suitable relatively high surface area of contact material with sufficiently low pressure drop, comprises a liquid-permeable support having particulate exchange material supported thereon. One embodiment of such a device is illustrated in the drawings wherein there is schematically indicated a tank 10 containing a liquid, such as a gold electroplating bath, e.g., a cobalt containing gold electroplating bath, and from which a sidestream of the liquid is withdrawn via line 12 and pump 14 and passed to liquid-flow inlet 16 from which the liquid passes, as indicated by the unnumbered arrows, into the annular space 21 formed between the inside walls of container 18 and the outer surface of cylindrical shaped body 20. Body 20 comprises a cylindrical body having a passage 22 extending longitudinally therethrough to define an annular-shaped cross-section of the body 20. In this embodiment, body 20 comprises polypropylene fiber wound into a spool about a core member 24 comprising a tube made of metal and having perforations 26 formed throughout its length. The outer periphery of body 20 is enclosed within a larger diameter tube casing 28 which, like core member 24, has a plurality of perforations 30 formed therein or may comprise a mesh screen.

A liquid-flow outlet 32 has a pedestal 34 mounted adjacent an end 38 thereof disposed within container 18. Liquid flow outlet 32 emerges through a liquid tight opening (unnumbered) formed in the bottom portion 36 of container 18. Pedestal 34 supports the lower end, as viewed in the drawing, of body 20 thereon. The end 38 of liquid-flow outlet 32 protrudes a small distance within passage 22 of body 20 and thus cooperates with a shoulder 34a of pedestal 34 which encircles the outer portion of body 20 to retain body 20 in place between pedestal 34 and the upper end 40 of container 18 and to seal the lower end (as viewed in the drawing) of passage 22. Disc-shaped sealing means 44 and annular shaped sealing means 46 are fixed to the underside of upper end 40 of container 18 to engage the upper end of body 20 and seal the upper end of passage 22. Liquid introduced by pump 14 and liquid-flow inlet 16 is constrained to flow radially through the annular space 21, then radially inwardly through the walls of body 20 thence downwardly into passage 22 and, via liquid-flow outlet 32 and line 48, back to tank 10.

The spool-wound polypropylene fiber of body 20 provides a foraminous, liquid-permeable contact member in the interstices of which are lodged particles of a suitable contact material in accordance with the invention. For example, wollastonite, celestite or other exchange material comprising one or both of strontium and calcium exchangeable ions may be pulverized, slurried and pumped through spool 24 to deposit the exchange material particles throughout the interstices formed by the spool wound fiber. Casing 28 prevents loss of the particles from body 20. A liquid-permeable support may be provided by any other foraminous structure such as a packed bed or a body having a plurality of liquid-flow passages formed therein for passage of the liquid to be treated therethrough, the walls of the passages being coated with a suitable exchange material. In such case an adhesive coating medium which will adhere a coating of exchange material particles to the walls may be used. Although other equivalent means may be utilized as the support, the structure shown in the drawings has been found to be useful and effective in the practice of the invention. Spool-wound fiber filter bodies such as that illustrated in the drawing are commercially available.

## Example 5

A cartridge of the type illustrated in the drawing, except that outer casing 28 comprised a #303 mesh screen, comprising a polypropylene fiber wound spool manufactured by Serfilco Company, Glenview, Illinois, model SF-25P 10 U, has approximately 100 grams of wollastonite fiber particles dispersed through the spool by pumping a slurry of fine wollastonite particles therethrough. The spool has a length of 25.4 centimeters, an outer diameter of 6.35 centimeters and a longitudinal central circular passage of 3.18 centimeters diameter extending therethrough. The wollastonite-loaded spool was rinsed by pumping water therethrough to remove powdered wollastonite amounting to 20 grams, leaving 80 grams of wollastonite particles embedded in the spool, which was then encased in the #303 steel mesh.

## Example 6

A quantity, 56.78 liters, of a cobalt containing gold cyanide plating solution was contaminated with 20.4 ppm lead

0190896

and pumped through the filter of Example 5 at a rate of 2.1 liters per minute to provide radially inward flow through the annular cross-section body. Initial pressure drop across the filter was 2 pounds per square inch ("psi"). After nine hours of operation, the pressure drop was 3 psi and the flow rate was 1.9 liters per minute. Lead removal results are shown in the following Table II; the gold and cobalt contents were not affected by the treatment.

## TABLE II
### Use Of Wollastonite Particle-Containing
### Spool-Wound Cartridge For Lead Removal

| Time of Treatment(hrs) | Lead Concentration(ppm) |
|---|---|
| 0 | 20.4 |
| 5 | 13.9 |
| 9 | 11.7 |
| 11 | 11.1 |

## Example 7

A polypropylene fiber wound spool cartridge similar to that of the cartridge of Example 5 (same dimensions) but manufactured by Brunswick Technetics, filter model Filterite FCG 78B2, was loaded with 100 grams of fine particles of the mineral celestite. The same plating solution as used in Example 6, but contaminated with 58.2 ppm lead, was pumped through the cartridge in the same manner and at a rate of about 1.9 liters per minute, with a pressure drop of about one psi across the filter. The lead removal results are shown in the following Table III. The gold and cobalt contents were unaffected by the treatment.

0190896

## TABLE III
## Use Of Celestite Particle-Containing
## Spool-Wound Cartridge For Lead Removal

| Time Of Treatment (hours) | Lead Concentration (ppm) |
|---|---|
| 0.0 | 58.2 |
| 1 | 46.1 |
| 4.5 | 26.4 |
| 8 | 20.1 |
| 12.5 | 15.4 |
| 16 | 13.7 |
| 21 | 10.3 |
| 24 | 9.1 |
| 30 | 8.8 |

## Example 8

The procedure of Example 6 was repeated with an antimony-containing gold cyanide plating bath, the antimony comprising a gold-alloying hardener. Neither the gold nor the antimony contents were affected by the treatment. The lead removal results are shown in Table IV.

## Table IV
## Use Of Wollastonite Particle-Containing
## Spool-Wound Cartridge For Lead Removal

| Time of Treatment (hours) | Lead Concentration (ppm) |
|---|---|
| 0.0 | 20.6 |
| 8 | 14.4 |
| 24 | 1.2 |

## Example 9

The procedure of Example 6 was repeated with a cobalt-containing gold cyanide citrate plating bath, in which citric acid was used to adjust the pH. Neither the gold nor cobalt contents were affected by the treatment, the lead removal effect of which is shown in Table V.

## TABLE V

### Use Of Wollastonite Particle-Containing
### Spool-Wound Cartridge For Lead Removal

| Time of Treatment (hours) | Lead Concentration (ppm) |
|---|---|
| 0.0 | 59.6 |
| 6 | 43 |
| 14 | 25.3 |
| 35 | 3.0 |

In each of the foregoing Tables, the time of treatment shown is cumulative. All tests were carried out using gold cyanide electroplating solutions of low pH, about 4.2 and containing 8 or 14.4 grams per liter gold measured as potassium gold cyanide plus the usual type of additives for gold electroplating baths, e.g., base metal hardeners, sometimes referred to as grain refining agents or brighteners, chelating agents and the like. The electrolytes serve to enhance electrical conductivity of the electroplating baths of the invention and may comprise any suitable electrolyte such as soluble metal salts, e.g., potassium citrate. Gold electroplating baths of the invention may comprise solutions of one or more such electrolytes, about 1 to 50 grams per liter gold, preferably about 4 to 20 grams per liter gold, from a source of gold ion such as potassium gold cyanide and, optionally, about 0.1 to 5 grams per liter base metal brightener, preferably about 0.1 to 2 grams per liter base metal.

Obviously, variations could also be made in the illustrated filter structure. For example, the perforated metal casings and mesh may be replaced by any equivalent foraminous structures and the inlet liquid may be introduced into the interior passage 22 for radially outward flow through the annular-shaped cross-section body and thence through the annular space between the body 20 and the interior surface of container 18.

While various materials have been shown to be effective as contact materials in accordance with the invention, celestite and wollastonite, for example, wollastonite sold under the trademark NYAD by Nyco Division of Process Minerals Inc. have been found to be particularly effective exchange materials for carrying out removal of lead ion from solution at quite low concentrations, and have been shown to be selective for lead in the presence of gold and in the presence of, respectively, cobalt and antimony. The method and materials of the invention may also be used in the presence of ions of the other gold-alloying hardening base metals. As described above, any material containing exchangeable calcium or strontium is suitable in the invention provided it is insoluble in the liquid to be treated.

While the invention has been described in detail with respect to specific preferred embodiments thereof it will be apparent to those skilled in the art upon a reading and understanding of the foregoing that numerous modifications may be made thereto which modifications are nonetheless within the spirit and scope of the invention and the appended claims.

## THE CLAIMS

What is claimed is:

1. A method for ion-exchange removal of lead ion from a liquid containing the same which comprises contacting the liquid with a solid exchange material which contains exchangeable strontium and is insoluble in the liquid to exchange strontium in the material with lead ion in the liquid.

2. The method of claim 1 wherein the exchange material comprises one which is insoluble in an aqueous lead ion-containing solution.

3. The method of claim 1 wherein the material is selected from the group consisting of one or more of a glass, a resin, a silicate, a borate, a sulfate, an aluminate, a pyrophosphate and a zeolite.

4. The method of claim 1 wherein the exchange material is in the form of a coherent contact medium and the step of contacting the liquid with the exchange material comprises passing the liquid into contact with the contact medium, and further including the step of withdrawing the contacted liquid from the contact medium.

5. A method for selective ion exchange removal of lead ion from a liquid containing lead ion and one or both of gold ion and gold-alloying ion which comprises contacting the liquid with a solid exchange material which is insoluble in the liquid and contains exchangeable ion selected from the group consisting of one or both of strontium and calcium so as to exchange exchangeable ion in the material with lead ion in the liquid preferentially to the one or both of gold and gold-alloying ion in the liquid.

6. The method of claim 5 wherein the exchange material comprises one which is insoluble in an aqueous solution containing lead ion and one or both of gold ion and gold-alloying ion.

7. The method of claim 5 wherein the liquid comprises a lead-contaminated gold plating solution.

8. The method of claim 5 wherein the exchange material is selected from the group consisting of one or more of a glass, a resin, a silicate, a borate, a sulfate, an aluminate, a pyrophosphate and a zeolite.

9. The method of claim 5 wherein the exchange material comprises wollastonite.

10. The method of claim 5 wherein the exchange material comprises celestite.

11. The method of claim 5 wherein the exchange material is in the form of a coherent contact medium and the step of contacting the liquid with the exchange material comprises passing the liquid into contact with the contact medium, and further including the step of withdrawing the contacted liquid from the contact medium.

12. The method of claim 11 wherein the exchange material comprises wollastonite.

13. The method of claim 11 wherein the exchange material comprises celestite.

14. Apparatus for ion-exchange removal of lead ion from a liquid containing the same, comprising:

a container having a liquid-flow inlet and a liquid-flow outlet; and

a coherent, liquid-permeable contact medium disposed within the container so that liquid flowing therethrough from the inlet to the outlet thereof is constrained to flow through the contact medium, the contact medium comprising a solid exchange material which is insoluble in the liquid and contains exchangeable ion selected from the group consisting of one or both of strontium and calcium.

15. The apparatus of claim 14 wherein the contact medium comprises a mixture of a particulate exchange material and a particulate filter bed medium.

16. The apparatus of claim 14 wherein the contact medium comprises a foraminous support having the exchange ma-

0190896

terial distended thereupon.

17. The apparatus of claim 16 wherein the foraminous support comprises a spool-wound filament having a coating of the exchange material thereon.

18. The apparatus of claim 16 wherein the foraminous support comprises a cylindrical body having a passage extending longitudinally therethrough to define an annular-shaped cross-section of the body, and including sealing means engaged with the cylindrical body to direct liquid flow radially therethrough.

19. The apparatus of claim 16 wherein the exchange material comprises a coating on the foraminous support.

20. The apparatus of any of claims 14-19 wherein the exchange material is selected from the group consisting of one or more of a glass, a resin, a silicate, a borate, a sulfate, an aluminate, a pyrophosphate and a zeolite.

21. The apparatus of any of claims 14-19 wherein the exchange material comprises wollastonite.

22. The apparatus of any of claims 14-19 wherein the exchange material comprises celestite.

23. The apparatus of any of claims 14-22 wherein the exchangeable ion is strontium.

24. The apparatus of any of claims 14-22 wherein the exchangeable ion is calcium.

25. An aqueous gold-plating bath comprises a source of gold ion and an electrolyte and is characterized by containing ions selected from the group consisting of one or both of calcium ion and strontium ion and from 0 to about 20 ppm lead ion.

26. The plating bath of claim 25 further containing one or more base metal ions selected from the group consisting of one or more of cobalt, nickel, iron, antimony and indium.

27. The plating bath of claim 25 or claim 26 containing not more than about 10 ppm lead ion.

28. The plating bath of any of claims 25-27 wherein the source of calcium and strontium in the bath is one or more solid

0190896

exchange materials which are insoluble in the bath and contain one or both of calcium and strontium, the one or both of calcium and strontium ion in the bath being derived from the materials by ion exchange with lead ion from the solution.

29. The plating bath of any of /claims25/-28 comprising about 1 to 50 grams per liter gold and about 0.1 to 5 grams per liter base metal ion selected from the group consisting of one or more of cobalt, nickel, iron, antimony and indium.

30. The plating bath of any of /claims25/-28 comprising about 4 to 20 grams per liter gold and 0.1 to 2 grams per liter of the base metal ion.

31. The plating bath of any of /claims25/-30 further including conventional gold-plating additives selected from the group consisting of base metal gold-hardeners and chelating agents.

FIG.2

FIG.1